Europäisches Patentamt

European Patent Office

Office européen des brevets

(11) Publication number: **0 169 175**
**B1**

# EUROPEAN PATENT SPECIFICATION

(45) Date of publication of patent specification: 27.07.88

(21) Application number: 85830149.2

(22) Date of filing: 17.06.85

(51) Int. Cl.⁴: **G 01 F 17/00**, G 01 F 23/14, G 01 F 23/16

(54) Device for measuring the volume of liquid present in a sealed vessel, particularly for measuring the fuel level in the tank of a motor vehicle.

(73) Proprietor: FIAT AUTO S.p.A.
Corso Giovanni Agnelli 200
I-10135 Torino (IT)

(72) Inventor: Cerruti, Eraldo
Via Castelgomberto 36
I-10136 Torino (IT)

(74) Representative: Bosotti, Luciano et al
c/o Jacobacci-Casetta & Perani S.p.A. Via Alfieri, 17
I-10121 Torino (IT)

(30) Priority: 21.06.84 IT 6763784

(43) Date of publication of application:
22.01.86 Bulletin 86/04

(45) Publication of the grant of the patent:
27.07.88 Bulletin 88/30

(84) Designated Contracting States:
DE FR GB

(56) References cited:
DE-A-3 029 093
DE-A-3 206 130
DE-B-1 227 679
GB-A-1 437 180
GB-A-2 060 911
US-A-3 744 306·

Courier Press, Leamington Spa, England.

EP 0 169 175 B1

## Description

The present invention relates to devices for measuring the volume of liquid present in a sealed vessel, and is concerned particularly with a device which can be associated with a pump source for establishing a pressure difference between the interior of the vessel and the exterior, and which can connect that part of the vessel free from liquid selectively and successively with the pump source and with a duct of predetermined restriction communicating with the exterior.

A measuring device of the type specified above is known, for example, from DE-A-3 029 093.

In this prior application, a method is described in which the measurement of the volume of liquid present in a sealed vessel is based on a time measurement. More specifically, this method arises from the fact that when a pressure difference - positive or negative - is created in a sealed vessel of known capacity containing a liquid, relative to a reference pressure (for example, atmospheric), and that part of the vessel not occupied by the liquid is then put into communication, through a restricted duct, with the exterior at the reference pressure, the time needed to restore the pressure in the vessel to the reference pressure is a function of that volume of the interior of the vessel not occupied by the liquid and hence, indirectly, of the volume of the liquid in the vessel.

By making use of this method one can remedy many serious disadvantages of the known level measuring devices, for example, measuring devices with a float or in which the detection of the liquid level is based on a measurement of the electrical capacitance between two metal plates partially immersed in the liquid itself.

These disadvantages, which lie essentially in their sensitivity to oscillation and agitation of the liquid 'within the vessel, are particularly apparent in the field of measurement of the volume of liquid in the fuel tank and in the oil sump of an internal combustion engine of a motor vehicle.

The device described in the aforementioned prior application has given rise to interesting and useful results.

Further research by the Applicant has led to a new industrial product constituted by the measuring device of the invention as claimed.

This device is characterised in that it comprises:
- a first barometric member having flexible diaphragm means the interior of which communicates in use with that part of the vessel free from liquid,
- a second barometric member having flexible diaphragm means which face respective flexible diaphragm means of the first barometric member, and have larger surface areas than the respective flexible diaphragm means of the first barometric member,
- rigid connecting means interposed between the facing flexible diaphragm means of the first and second barometric members so as to be movable by the deformation of these flexible diaphragm means,
- a sensor element which, by movement of the connecting means, is movable between a first operating position corresponding to the undeformed position of the flexible diaphragm means of the first and second barometric members and a second operating position, the sensor element having associated resilient means which bias it towards its first operation position,
- a pneumatic distribution system controlled by a shutter with two operating positions and defining a first communication line between the pump source and the liquid-free part of the vessel and a second communication line between the liquid-free part of the vessel, the interior of the second barometric member and the restricted duct, the communication lines being selectively opened and closed, in alternation with each other, by movement of the shutter,
- a control circuit which controls the movement of the shutter of the pneumatic distribution system as a function of the position of the sensor element in an arrangement such that, in use, when the sensor element is in its first operation position, the pump source communicates with the liquid-free part of the vessel along the first communication line of the pneumatic distribution system and, when the sensor element is in its second operating position, the liquid-free part of the vessel communicates along the second communication line of the pneumatic distribution system with the second barometric element and with the restricted duct, and
- measuring means associated with the control circuits and able to detect the duration of the periods during which the sensor element remains in its second operating position, in order to derive the volume of liquid present in the sealed vessel from the duration of these indication periods.

By virtue of this characteristic, a device is formed which allows the volume of liquid in a sealed vessel to be measured very precisely. In a preferred application, the device according to the invention is intended for use in measuring the fuel level or oil level in the tank of a motor vehicle.

In the device according to the invention as claimed, the measurement of the fuel level or the oil level is effected by measuring the period-necessary for the pressure difference established initially between the interior of the vessel (tank) and the exterior as a result of the connection of the vessel to a pressure source or suction source (for example, the intake manifold of the motor vehicle engine) to return to a reference value, when the vessel itself is put into communication with the exterior environment through a duct of predetermined restriction. This reference value is linked to the value of the initial pressure difference by a geometric factor given by the ratios between the surfaces of the facing flexible diaphragms of the first and second barometric members. The measure value detected by the device according to the invention is thus independent of the external pressure and of the initial pressure difference. This allows the realisation of a very accurate measuring device with a performance which does not vary appreciably upon variations of the environmental conditions and the conditions of use.

According to a preferred embodiment of the present invention, the control circuit has an associated light source (this term also being understood to include electromagnetic radiation in the infra-red and ultra-violet ranges) and photodetector; the sensor element is then constituted by a section of optical wave guide which, in one operative position chosen from the said first operative position and the said second operative position, transmits radiation between the source and the photodetector while, in its other operative position, this transmission of radiation is substantially prevented. The shutter of the pneumatic distribution system is preferably controlled by a solenoid valve. The control circuit is preferably an electrical circuit.

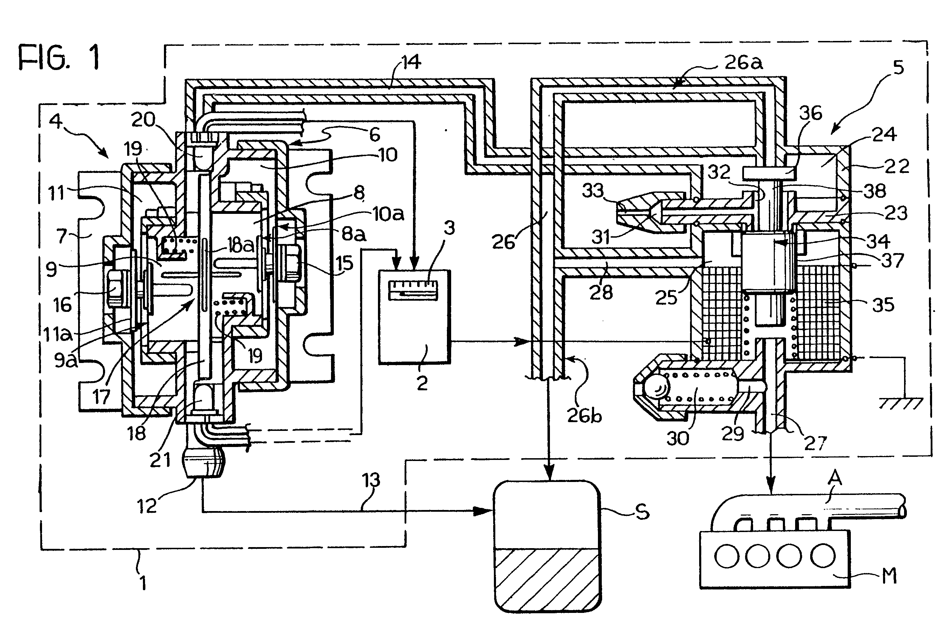

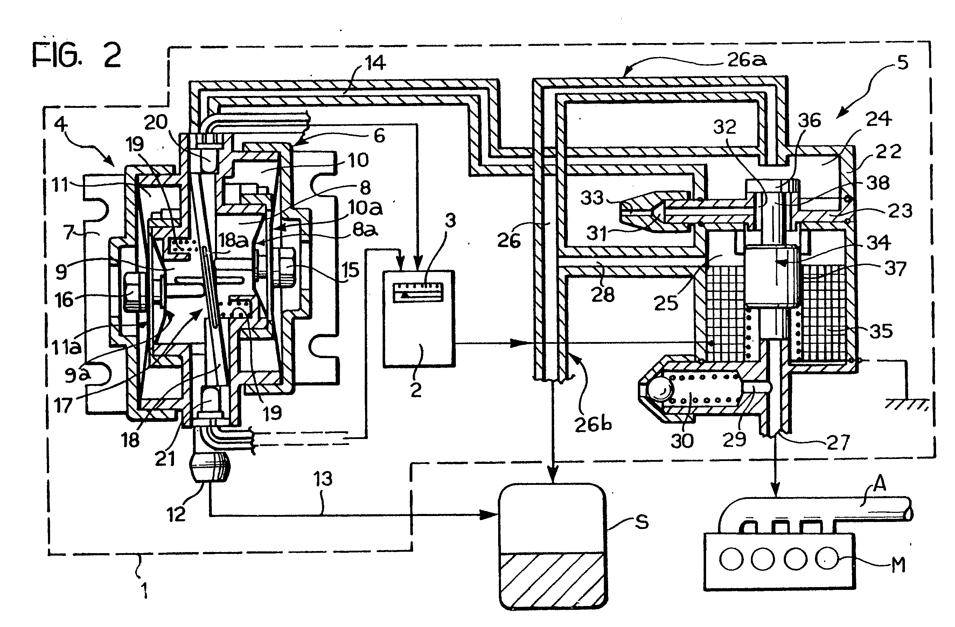

The invention will now be described, purely by way of non-limiting example, with reference to the appended drawings in which Figures 1 and 2 illustrate respectively two different operative positions of the measuring device according to the invention.

In the drawings a device for measuring the volume of liquid in a sealed vessel is generally indicated 1.

The embodiment illustrated deals with a device for measuring the volume of fuel in the tank S of a motor vehicle (not illustrated) driven by an internal combustion engine M.

The operation of the device 1, which is essentially an electro-pneumatic device, is controlled by an electrical control circuit 2 having a visual display unit 3 on which there are digits or other symbols indicative of the level of fuel in the tank S.

Preferably, the visual display unit 3 is mounted on the dashboard of the motor vehicle so that it can be readily referred to by the driver of the motor vehicle itself.

The device 1 can be seen to be constituted by two essential functional blocks, that is to say, a pneumatically-operated switch 4 and a pneumatic distributor 5.

The switch 4 is constituted by a closed casing 6 having flanges 7 which allow it to be fixed to the body of the motor vehicle.

The casing 6 defines two pairs of barometric capsules, indicated 8 - 11.

These barometric capsules have respective associated flexible diaphragms each constituted by a metal or plastics sheet 8a, 9a, 10a, 11a.

The interiors of the first barometric capsules 8, 9 intercommunicate so as to form a single volume (a first barometric member) into which a connection union 12 opens. The common internal volume of the barometric capsules 8, 9 communicates with that part of the tank S which is free from liquid through a connecting pipe, schematically indicated 13, fitted at one end onto the union 12.

The interiors of the barometric capsules 10, 11 also interconnect so as to form a single volume (a second barometric member) within the casing 6, which communicates with the pneumatic distributor 5 through a connecting pipe 14.

The relative disposition of the walls of the casing 6 defining the two pairs of barometric capsules 8 - 11, therefore, is such that the diaphragms 8a and 10a of the first pair of barometric capsules face each other. Preferably, both of the diaphragms are circular and concentric with each other. The diaphragm 10a of the capsule 10 has a larger surface area than the diaphragm 8a of the capsule 8. For example, according to one choice which is a good compromise between the accuracy of the measurement obtainable and the rapidity thereof, the diaphragm 10a may have an area which is about four times the area of the diaphragm 8a.

A central, elongate, rigid connecting member 15 extends between the two facing diaphragms 8a and 10a. The member 15 is oriented perpendicular to the planes of the diaphragms 8a, 10a and extends into the pneumatic capsule 8. Since the member 15 is rigid and inextensible, the diaphragm 8a and the diaphragm 10a are interconnected rigidly and centrally.

In exactly the same way, the diaphragms 9a and 11a of the other two barometric capsules 9 and 11 are interconnected centrally by another rigid elongate member 16 which extends into the barometric capsule 9 perpendicular to the planes of the diaphragms 9a and 11a.

The diaphragm 9a has a surface area which is practically identical to the area of the diaphragm 8a, while the diaphragm 11a has a surface area substantially equal to that of the diaphragm 10a. The area of the diaphragm 11a is thus larger (typically about four times) than the area of diaphragm 9a facing it and coupled mechanically therewith by the rigid member 16.

The relative locations of the two pairs of barometric capsules 8, 10 and 9, 11 is such that the connecting members 15 and 16 lie on two straight lines which are parallel and side by side; the two members 15 and 16 are thus not aligned with each other. These members have free ends (this term meaning the ends opposite the region of connection to the diaphragms 8, 10 and 9, 11) which face each other approximately so as to define a space (gap) 17 in the common internal volume of the barometric capsules 8 and 9 (Figure 1) for the mounting of elongate section of optical waveguide 18 between the two members 15 and 16.

The optical wave guide 18 is mounted in the casing 6 with the interposition of two helical springs 19 which act to keep the element 18 in a position of alignment with the straight line which ideally joins a light source 20 to a photodetector element 21 mounted within the casing 6.

In the embodiment preferred at present, the light source 20 is constituted by a light emitting diode (LED); it is possible to use any other light source, however, it being understood of course that this term also includes electromagnetic radiation in the infra-red and ultra-violet ranges.

The source 20 is supplied and activated by the electrical control circuit 2 to which the output signals from the photodetector 21 are fed.

When the element 18 is in the operating position of Figure 1, that is to say, the position defined by the resilient force exerted by the springs 19 (the rest position),the element 18 itself transmits light between the source 20 and the photodetector 21. Light is thus incident on the photodetector 21 and the latter sends a corresponding electrical signal to the control circuit 2.

When the element 18 pivots from its rest position, that is, moves away from the position of alignment between the source 20 and the photodetector 21, the light transmission to the photodetector 21 is cut off. This thus causes a variation in the level of the signal output by the photodetector 21 on which radiation emitted by the source 20 is no longer incident. This level variation is detected by the circuit 2 which, as will be explained below, sends a control signal to the pneumatic distributor 5.

The pivoting of the optical guide section 18 is effected by the movement of the elements 15 and 16 which act on a flattened central projecting part 18a of the guide 18. More particularly, when a low pressure (that is to say, a pressure less than ambient pressure) is established in the common interior of the barometric capsules 8 and 9 (the first barometric element), the diaphragms 8a and 9a and consequently the diaphragms 10a and 11a deform in the direction which causes the elements 15 and 16 to approach each other (Figure 2). As a result of this approach, the optical guide section 18 is made to pivot against the return force exerted by the springs 19. The assembled arrangement of the section 18 described and the fact that the elements 15 and 16 act on a flattened projection (18a) thereof ensure that the section 18 is not removed accidentally from its mounting as a result of the vibrations to which the switch 4 is subject during use in a motor vehicle.

The pneumatic distributor 5 is constituted by a closed casing 22 having an internal partition wall 23 defining two fluid-tight chambers, indicated 24 and 25.

The chamber 24 is connected through the pipe 14 to the common interior of the barometric capsules 10 and 11 (the second barometric member). The chamber 24 communicates with the part of the tank S which is free from liquid through a further pipe, generally indicated 26. Since the pipe 13 connected to the union 12 also terminates at this part of the tank S, the pipe 26 constitutes a communication line which can connect the chamber 24 in a fluid-tight manner to the common interior of the barometric capsules 8 and 9.

Two further pipes 27 and 28 terminate instead at the chamber 25. The pipe 27 puts the chamber 25 into communication with a low pressure source constituted, in the embodiment illustrated, by the intake manifold A of the engine M. The pipe 28, however, joins with the pipe 26 so as to put the chamber 25 into communication with the liquid-free part of the tank S. The pipe 26 is thus divided into two successive sections 26a and 26b. The first of these sections (26a) extends between the chamber 24 and the point of junction with the pipe 28; the second section (26b) extends between this point of junction and the tank S.

A vent duct, indicated 29, branches from the pipe 27 adjacent the casing 22. The duct 29 has an associated one-way ball valve 30 which allows gases to pass only in the direction corresponding to suction into the pipe 27 in the presence of a pressure difference (low pressure) between the exterior and the interior of the pipe 27 greater than a threshold level which can be adjusted selectively by adjustment of the valve 30.

A further pipe, indicated 31, extends into the partition wall 23. At one end the pipe 31 opens into a further pipe 32 which passes right through the partition wall 23. At its opposite end, the pipe 31 communicates with the exterior through a nozzle 33 of predetermined restricted section. The term "restricted" is to be understood to mean that the nozzle 33 has a section such that, when there is a pressure difference between the pipe 32 and the exterior, a controlled gas flow is established through the pipe 31 and the nozzle 33 which tends to reduce this pressure difference gradually. The strength of the flow may be controlled (other factors being equal) by varying the section of the nozzle 33.

A shutter 34, the position of which is controlled by a solenoid 35 supplied by the electrical circuit, is slidable (without sealing) in the pipe 32, which is aligned axially with the end of the pipe 26 opening into the chamber 24.

The shutter 34 can be seen to consist essentially of two cylindrical valve elements 36 and 37 connected together by an intermediate rod 38 slidable within the opening 32.

The valve element 36, which moves within the chamber 24, is intended to seal alternately the end of the pipe 26 and the end of the pipe 32 opening into the chamber. The valve element 37, which moves in the chamber 25, is instead intended to seal alternately the end of the pipe 32 and the end of the pipe 27 opening into the chamber 25.

More specifically, in the first position of operation illustrated in Figure 1, the valve element 36 closes the end of the pipe 26 while the valve element 37 closes the corresponding end of the pipe 32. Under these conditions, the chamber 25 communicates exclusively with the pipe 27 and the pipe 28, while the chamber 24 communicates with the exterior through the pipe 31 and with the common interior of the barometric capsules 10 and 11 through the pipe 14.

When, as a result of a command imparted by the electrical control circuit 2, the solenoid 35 moves the shutter 34 to its other operating position illustrated in Figure 2, the valve element 36 disengages from the end of the pipe 26 and puts the chamber 24 into communication with the pipe 26. At the opposite end of the chamber 24, the valve element 36 instead seals the corresponding end of the pipe 32, isolating the chamber 24 from the pipe 31 which communicates with the exterior through the nozzle 33.

At the same time, the valve element 37 disengages from the corresponding end of the pipe 32 and puts the chamber 25 into communication with the exterior through the pipe 31 and the nozzle 33. At the same time, the opposite end of the valve element 37 seals the end of the pipe 27 opening into the chamber 25.

The operation of the device according to the invention occurs as a sequence of switchings between the condition illustrated in Figure 1 and the condition illustrated in Figure 2.

More specifically, assuming that one starts from an initial operating condition substantially similar to that illustrated in Figure 1, in which the engine M is running and draws the fuel the level of which it is desired to measure from the tank S, the low pressure in the intake manifold A is transmitted through the communication line constituted by the pipe 27, the chamber 25, the pipe 28 and the section 26b of the pipe 26 to that part of the tank S which is above the free surface of the fuel. Neither the pipe 29 nor the section 26a of the pipe 26 constitutes a vent line for the low pressure. The pipe 29 is in fact closed by the ball valve 30 which is calibrated appropriately, while the section 26a of the pipe 26 is closed by the valve element 36.

The low pressure in that part of the tank which is beneath the free surface of the fuel is transmitted, through the pipe 13 connected to the union 12, to the common interior of the barometric capsules 8 and 9 (the first barometric member), causing the gradual contraction of the diaphragms 8a and 9a towards the deformed position illustrated in Figure 2.

The diaphragms 10a and 11a oppose this deformation only by their resilient reaction force (which is practically negligible), since the common interior of the barometric capsules 10 and 11 (the second barometric member) communicates with the exterior through the pipe 14, the chamber 24, the pipe 31 and the nozzle 33 (Figure 1). Since the deformation of the diaphragms 8a and 9a occurs gradually, the inflow through the nozzle 33 is practically negligible.

As a result of the deformation of the diaphragms 8a and 9a, the elements 15 and 16 gradually approach each other to bring the optical guide section 18 finally into the position illustrated in Figure 2. As a result of the pivoting of the guide section 18, the path for the propagation of light between the source 20 and the photodetector 21 is cut off. The corresponding variation in the signal output by the photodetector 21 is detected by the control circuit 2 which sends a corresponding actuation signal to the solenoid 32.

Upon reception of the signal, the solenoid 35 effects the displacement of the shutter 34 towards the operating position illustrated in Figure 2.

Under these conditions, the opening of the pipe 27 into the chamber 25 is shut by the valve element 37. The low pressure transmitted from the intake manifold A to the pipe 26 (low pressure which can no longer be propagated towards the tank S through the chamber 25, the pipe 28 and the pipe 26b) causes the ball valve 30 to open and consequently establishes a gas flow through the pipe 29. Simultaneously through the pipe 26, the open end of which is left free by the valve element 36, the chamber 24 and the pipe 14 the low pressure in the tank S is also propagated to the common interior of the barometric capsules 10 and 11 (the second barometric member) and maintains the diaphragms 10a and 11a firmly in the deformed positions already reached as a result of the action exerted by the diaphragms 8a, 9a through the elements 15 and 16. The guide section 18 is thus firmly held in its position of non-alignment with the source 20 and the photodetector 21 against the return action exerted by the springs 19.

Simultaneously, that part of the tank S which is above the free surface of the fuel is put into communication with the pipe 31 through the pipe section 26b, the pipe 28, the chamber 25, and the open end of the pipe 32 facing the chamber 25. The tank S is thus now put into communication with the exterior through the nozzle 33. A restricted gas flow is thus established through the nozzle 33, the pipe 31, the chamber 25, the pipe 28 and the pipe section 26b, which tends to return the pressure in the tank S gradually to equilibrium with the ambient pressure.

Thus, the low pressure within the tank S tends gradually to attenuate.

The attenuation of this low pressure causes a gradual attenuation of the low pressure in the pneumatic capsules 8 and 9 (the first barometric member) which communicate with the tank S through the pipe 13, and in the pneumatic capsules 10 and 11 (the second barometric member) which communicate with the tank through the pipe 14, the chamber 24 and the pipe 26.

Thus, an operating condition is gradually reached in which the pressure gradients acting on the diaphragms 10a and 11a are no longer able to overcome the reaction force exerted by the springs 19, which tend to return the optical guide section 18 to the position of alignment with the source 20 and the photodetector 21.

The gradual return to the initial condition of operation, however, is achieved by a so-called hysteresis process.

The complete movement of the waveguide section 18 from the rest position of Figure 1 to the non-aligned position of Figure 2 is in fact achieved when the reaction force of the springs 19 is overcome by the force exerted on the elements 15 and 16 by the pressure gradient (low pressure) acting on the diaphragms 8a and 9a. On the other hand, the return of the optical guide section 18 to the rest position of Figure 1 occurs only when the return force exerted by the springs 19 is able to overcome the force resulting from the pressure gradient acting on the diaphragms

10a and 11a of the barometric capsules 10 and 11. Since as seen above, the surface areas of the diaphragm 10a and the diaphragm 11a are about four times the surface areas of the corresponding diaphragms 8a and 9a, the guide section 18 remains in the position of Figure 2 until there is a pressure gradient (low pressure) between the barometric capsules 10 and 11 (the second barometric member) and the exterior of about four times less than that which moved the section 18 away from the position of alignment with the source 20 and the element 21.

When the guide section 18 returns to the position of Figure 1 as a result of the return force exerted by the springs 19 being no longer sufficient to oppose the diaphragms 10a and 11a, the path of propagation of the radiation between the light source 20 and the photodetector 21 is reestablished. Radiation is again incident on the photodetector 21 and the signal output thereby returns to its initial level.

The control circuit 2 detects the change in level of the signal output by the photodetector 21 and sends the solenoid 35 a corresponding control signal to return the shutter 34 to the position of Figure 1.

Under these conditions, the chamber 25 is again put into communication with the pipe 26, whereby the tank S is again connected to the low pressure source constituted by the manifold A. At the same time, the remaining pressure gradient which still acts on the diaphragms 10a and 11a is gradually annulled as a result of the connection of the interior of the barometric capsules 10 and 11 to the exterior. This connection is achieved through the pipe 14, the chamber 24, the pipes 32 and 31, and the nozzle 33.

The operation of the device continues with a repetition of the cycle described.

Measuring means are associated with the control circuit 2 which are sensitive to the successive switchings of the signal output by the photodetector 21. The form of these measuring means may easily be defined by an expert in the art and will not be described in detail, here since they are not relevant - per se - for the purposes of illustrating the invention and because of the very numerous possible variants.

What is essential is that these measuring means are able to provide, and preferably to present on a visual display unit 3, a signal corresponding to the duration of the period in each operating cycle of the device between the moment when the guide section 18 is brought into the position illustrated in Figure 2 under the action of the pressure gradient acting on the diaphragms 8a and 9a and the moment when the section 18 returns to the position of Figure 1 due to the action of the springs 19 being no longer sufficient to withstand the force exerted by the pressure gradient acting on the diaphragms 10a and 11a.

According to the principle of operation explained in the introductory part of the present specification, the duration of this period depends solely (other factors being equal) on the volume of that part of the tank S which is above the free surface of the liquid in the tank. The duration of this period therefore increases gradually as the tank empties.

Reference measurements made with a predetermined known quantity of liquid in the tank S thus allows the device to be calibrated.

More specifically, the device of the invention measures the period needed for the difference in pressures between the sealed vessel and the exterior to reach a level corresponding to a fraction of the difference in pressure established initially as a result of the connection to a pump source. The actual fraction itself is determined essentially by geometric factors (the ratios between the surface areas of the flexible diaphragms of the barometric capsules) and is not influenced either by the initial value of the pressure difference or, particularly, by the value of the external pressure.

The choice of a ratio between the surface areas of the flexible diaphragms of the two barometric elements (8, 9; 10, 11) equal to 4 has been shown to be preferable for ensuring a good degree of accuracy in the measurement, while at the same time avoiding an excessively long duration of each measuring cycle and avoiding a postponement of the presentation of the data to the exterior. In the presently preferred embodiment, the measuring cycle of the device according to the invention lasts several seconds.

The term "low pressure" has been used here (without precise quantitative significance in itself) to indicate the difference between the external ambient pressure (typically atmospheric) and a subatmospheric pressure generated within the tank S and the barometric capsules 8 - 11 as a result of their connection to the intake manifold A.

Naturally (with the exception of the different directions of deformation of the diaphragms 8a, 9a, 10a, 11a and the need to reverse the direction of operation of the valve 30) the principle of operation explained above also applies identically to a device which operates with a super-atmospheric-pressure source instead of the low pressure source such as the induction manifold A.

**Claims**

1. Device for measuring the volume of liquid in a sealed vessel (S), which can be connected to a pump source (A) for establishing a pressure difference between the interior of the vessel (S) and the exterior, and which can connect that part of the vessel (S) free from liquid selectively and successively to the pump source (A) and a duct of predetermined restriction (33) communicating with the exterior, characterised in that it comprises:

a first barometric member (8, 9) having flexible diaphragm means (8a, 9a), the interior of which communicates in use with that part of the vessel (S) free from liquid,

a second barometric member (10, 11) having flexible diaphragm means (10a, 11a) which face respective flexible diaphragm means (8a, 9a) of the first barometric member (8, 9) and have larger surface areas than the respective flexible diaphragm means (8a 9a) of the first barometric member (8, 9),

a rigid connecting means (15, 16) interposed between the facing flexible diaphragm means (8a, 10a; 9a, 11a) of the first (8, 9) and second (10, 11) barometric members so as to be movable by the deformation of these flexible diaphragm means (8a, 10a; 9a, 11a),

a sensor element (18) which, by movement of the connecting means (15, 16) is movable between a first operating position corresponding to the undeformed position of the flexible diaphragm means (8a, 10a; 9a, 11a) of the first (8, 9) and second (10, 11) barometric members and a second operating position, the sensor element (18) having associated resilient means (19) which bias it towards its first operating position,

a pneumatic distribution system (22 - 32) controlled by a shutter (34) with two operating positions and defining a first communication line (25, 26b, 27, 28) between the pump source (A) and the liquid-free part of the vessel (S), and a second communication line (14, 24, 26, 28, 31, 32) between the liquid-free part of the vessel (S), the interior of the second barometric member (10, 11) and the restricted duct (33), the communication lines (25, 26b, 27, 28; 14, 24, 26, 28, 31, 32) being selectively opened and closed, in alternation with each other, by movement of the shutter (34),

a control circuit (2) which controls the movement of the shutter (34) of the pneumatic distribution system (22 - 32) as a function of the position of the sensor element (18) in an arrangement such that, in use, when the sensor element (18) is in its first operating position, the pump source (A) communicates with the liquid-free part of the vessel (S) through the first communication line (25, 26b, 27, 28) of the pneumatic distribution system (22 - 32) and, when the sensor element (18) is in its second operating position, the liquid free part of the vessel (S) communicates through the second communication line (14, 24, 26, 28, 31, 32) of the pneumatic distribution system (22 - 32) with the second barometric element (10, 11) and with the restricted duct (33), and

measuring means associated with the control circuits (2) and able to detect the duration of the periods during which the sensor element (8) remains in its second operating position, in order to derive the volume of liquid present in the sealed vessel (S) from the duration of these indication periods.

2. Device according to Claim 1, characterised in that it includes:

two pairs of barometric capsules (8, 10; 9, 11), each of which includes a first (8; 9) and a second (10; 11) barometric capsule having respective flexible diaphragms (8a, 10a; 9a, 11a) facing each other and an elongate connecting element (15, 16) interposed between the facing diaphragms (8a, 10a; 9a, 11a), the two pairs of capsules (8, 10; 9, 11) being coupled together in an arrangement such that the first capsule (8, 9 respectively) and the second capsule (10, 11 respectively) of each pair communicate respectively with the first capsule (9, 8 respectively) and the second capsule (11, 10 respectively) of the other pair, and the connecting elements (15, 16) of both the pairs of capsules (8, 10; 9, 11) are substantially parallel and non-aligned with each other and move in opposite directions to vary the pressure present in the corresponding capsules (8, 9, 10, 11) of each pair, and

an elongate sensor element (18) cooperating with the substantially parallel and non-aligned connecting elements (15, 16) in an arrangement such that a relative movement of the connecting elements (15, 16) causes a corresponding pivoting movement of the sensor element (18).

3. Device according to Claim 1 or Claim 2, characterised in that the control circuit (2) has an associated light source (20) and photodetector (21), and in that the sensor element (18) is constituted by a section of optical guide which, in one operative position chosen from said first operating position and said second operating position, transmits radiation between the source (20) and the photodetector (21) while, in its other operating position, this transmission of radiation is substantially prevented.

4. Device according to any one of Claims 1 to 3, characterised in that the shutter (34) of the pneumatic distribution system (22 - 32) is controlled by a solenoid valve (35), and in that the control circuit (2) is constituted by an electrical circuit.

5. Device according to any one of the preceding claims, characterised in that the ratio between the surface area of each flexible diaphragm (10a, 11a) of the second barometric member (10, 11) and the surface area of the respective facing flexible diaphragm (8a, 9a) of the first barometric member (8, 9) is substantially four.

**Patentansprüche**

1. Vorrichtung zur Messung der Flüssigkeitsmenge in einem geschlossenen Behälter (S), die mit einer eine Quelle zur Erzeugung einer Druckdifferenz zwischen dem Innern des Behälters (S) und dem Außenraum bildenden Pumpe (A) verbindbar ist und den flüssigkeitsfreien Teil des Behälters (S) wahlweise nacheinander mit dieser Pumpe (A) und einer Drosselleitung (33) mit vorbestimmter Drosselung verbinden kann, die mit dem Außenraum in Verbindung steht,

gekennzeichnet durch ein erstes barometrisches Glied (8, 9) mit einer flexiblen Membrananordnung (8a, 9a), deren Innenraum im Betrieb mit dem flüssigkeitsfreien Teil des Behälters (S) verbunden ist,

ein zweites barometrisches Glied (10, 11) mit einer flexiblen Membrananordnung (10a, 11a), die der flexiblen Membrananordnung (8a, 9a) des ersten barometrischen Glieds (8, 9) gegenüberliegt und größere Flächen hat als die flexiblen Membrananordnung (8a, 9a) des ersten barometrischen Glieds (8, 9),

starre Verbindungsmittel (15, 16), die zwischen den einander gegenüberliegenden Membrananordnungen (8a, 10a; 9a, 11a) des ersten (8, 9) und des zweiten (10, 11) barometrischen Glieds derart angeordnet sind, daß sie bei Verformung der flexiblen Membrananordnungen (8a, 10a; 9a, 11a) bewegt werden,

ein Sensorelement (18), das durch die Bewegung der Verbindungsmittel (15, 16) zwischen einer ersten Betriebs-stellung, die der unverformten Position der flexiblen Membrananordnungen (8a, 10a; 9a, 11a) des ersten (8, 9) und des zweiten (10, 11) barometrischen Glieds entspricht, und einer zweiten Betriebsstellung bewegbar ist, wobei dem Sensorelement (18) elastische Mittel (19) zugeordnet sind, die es in seine erste Betriebsstellung vorspannen,

ein von einem Verschlußglied (34) mit zwei Betriebsstellungen gesteuertes pneumatisches Verteilersystem (22 - 32), das aus einer ersten zwischen der Pumpe (A) und dem flüssigkeitsfreien Teil des Behälters (S) verlaufende Verbindungsleitung (25, 26b, 27, 28) und einer zwischen dem flüssigkeitsfreien Teil des Behälters (S), dem Innenraum des zweiten barometrischen Glieds (10, 11) und der Drosselleitung (33) verlaufende zweiten Verbindungsleitung (14, 24, 26, 28, 31, 32) besteht, wobei diese Verbindungsleitungen (25, 26b, 27, 28; 14, 24, 26, 28, 31, 32) durch die Bewegung des Verschlußglieds (34) abwechselnd selektiv geöffnet und geschlossen werden,

eine Steuerschaltung (2), die die Bewegung des Verschlußglieds (34) des pneumatischen Verteilersystems (22 - 32) in Abhängigkeit von der Position des Sensorelements (18) in einer solchen Weise steuert, daß dann, wenn das Sensorelement (18) sich während des Betriebs in seiner ersten Betriebsstellung befindet, die Pumpe (A) über die erste Verbindungsleitung (25, 26b, 27, 28) des pneumatischen Verteilersystems (22 - 32) mit dem flüssigkeitsfreien Teil des Behälters (S) verbunden ist, und dann, wenn das Sensorelement (18) sich in seiner zweiten Betriebsstellung befindet, der flüssigkeitsfreie Teil des Behälters (S) über die zweite Verbindungsleitung (14, 24, 26, 28, 31, 32) des pneumatischen Verteilersystems (22, 32) mit dem zweiten barometrischen Glied (10, 11) und mit der Drosselleitung (33) verbunden ist,

und eine der Steuerschaltung (2) zugeordnete Meßeinrichtung zur Messung der Dauer der Zeitperioden, während derer das Sensorelement (18) in seiner zweiten Betriebsstellung verbleibt, und zur Herleitung der in dem geschlossenen Behälter (S) vorhandene Flüssigkeitsmenge aus der Dauer dieser Perioden.

2. Vorrichtung nach Anspruch 1, gekennzeichnet durch zwei Paare barometrischer Kapseln (8, 10; 9, 11), die jeweils eine erste (8; 9) und eine zweite (10; 11) barometrische Kapsel mit einander gegenüberstehenden flexiblen Membranen (8a, 10a; 9a, 11a) sowie ein langgestrecktes Verbindungselement (15, 16) umfassen, das zwischen den einander gegenüberstehenden Membranen (8a, 10a; 9a, 11a) angeordnet ist, wobei die beiden Paare von Kapseln (8, 10; 9, 11) in einer solchen Anordnung miteinander gekoppelt sind, daß die erste Kapsel (8 bzw. 9) und die zweite Kapsel (10 bzw. 11) jedes Paars mit der ersten Kapsel (9 bzw. 8) bzw. der zweiten Kapsel (11 bzw. 19) des anderen Paars in Verbindung steht, und die Verbindungslemente (15, 16) beider Paare von Kapseln (8, 10; 9, 11) im wesentlichen parallel und nicht nicht miteinander fluchtend angeordnet sind und sich in entgegengesetzten Richtungen bewegen, um den in den entsprechenden Kapseln (8, 9, 10, 11) jedes Paars vorhandenen Druck zu variieren, sowie ein langgestrecktes Sensorelement (18), das mit den im wesentlichen parallelen und nicht miteinander fluchtenden Verbindungselementen (15, 16) in einer solchen Anordnung zusammenwirkt, daß eine Relativbewegung der Verbindungselemente (15, 16) eine entsprechende Schwenkbewegung des Sensorelements (18) bewirkt.

3. Vorrichtung nach Anspruch 1 oder 2, dadurch gekennzeichnet, daß der Steuerschaltung (2) eine Lichtquelle (20) und ein Photodetektor (21) zugeordnet sind und daß das Sensorelement (18) von einem Abschnitt eines optischen Wellenleiters gebildet ist, der in einer aus der ersten und der zweiten Betriebsstellung ausgewählten Betriebsstellung Strahlung zwischen der Lichtquelle (20) dem Photodetektor (21) überträgt, während in seiner anderen Betriebsstellung im wesentlichen keine Übertragung von Strahlung stattfindet.

4. Vorrichtung nach einem der Ansprüche 1 bis 3, dadurch gekennzeichnet, daß das Verschlußglied (34) des pneumatischen Verteilersystems (22 - 32) von einem Magnetventil (35) gesteuert wird und daß die Steuerschaltung (2) eine elektrische Schaltung ist.

5. Vorrichtung nach einem der Ansprüche 1 bis 3, dadurch gekennzeichnet, daß das Verhältnis zwischen der Oberflächengröße der flexiblen Membranen (10a, 11a) des zweiten barometrischen Glieds (10, 11) und der Oberflächengröße der jeweiligen gegenüberstehenden flexiblen Membran (8a, 9a) des ersten barometrischen Glieds (8, 9) etwa vier beträgt.

**Revendications**

1. Dispositif de mesure du volume d'un liquide dans un réservoir fermé (S), qui peut être connecté à une pompe (A) destinée à établir une différence de pression entre l'intérieur du réservoir (S) et l'extérieur, et qui peut connecter la partie du réservoir (S) qui est dépourvue de liquide sélectivement et successivement à la pompe (A) et à un conduit ayant un rétrécissement prédéterminé (33) communiquant avec l'extérieur, caractérisé en ce qu'il comprend

un premier organe manométrique (8. 9) ayant des diaphragmes flexibles (8a, 9a) dont l'intérieur communique pendant l'utilisation avec la partie du réservoir (S) qui est dépourvue de liquide,

un second organe manométrique (10, 11) ayant des 1 diaphragmes flexibles (10a, 11a) qui sont tournés vers des diaphragmes flexibles respectifs (8a, 9a) du premier organe manométrique (8, 9) et qui ont une surface supérieure à celle des diaphragmes flexibles respectifs (8a, 9a) du premier organe manométrique (8, 9)

des dispositifs rigides (15, 16) de raccordement disposés entre les diaphragmes flexibles en regard (8a, 10a; 9a, 11a) du premier (8, 9) et du second (10, 11) organe manométrique afin qu'ils soient mobiles à la suite de la déformation de ces diaphragmes flexibles (8a, 10a; 9a, 11a),

un élément capteur (18) qui, par déplacement des dispositifs de raccordement (15, 16), est mobile entre une première position de travail correspondant à la position non déformée des diaphragmes flexibles (8a, 10a; 9a, 11a) du premier (8, 9) et du second (10, 11) organe manométrique et une seconde position de travail, l'élément capteur (18) ayant un dispositif élastique associé (19) qui le rappelle vers sa première position de travail.

un systéme de distribution pneumatique (22 - 32) commandé par un obturateur (34) ayant deux positions de travail et délimitant une première canalisation de communication (25, 26b, 27, 28) entre la pompe (A) et la partie dépourvue de liquide du réservoir (S), et une seconde canalisation de communication (14, 24, 26, 28, 31, 32) entre la partie dépourvue de liquide du réservoir (S), l'intérieur du second organe manométrique (10, 11) et le conduit (33) ayant un rétrécissement, les canalisations de communication (25, 26b, 27, 28; 14, 24, 26? 28, 31, 32) étant ouvertes et fermées sélectivement en alternance lors du déplacement de l'obturateur (34),

un circuit de commande (2) qui commande le déplacement de l'obturateur (34) du systéme de distribution pneumatique (22 - 32) en fonction de la position de l'élément capteur (18), avec une disposition telle que, pendant l'utilisation, lorsque l'élément capteur (18) est dans sa première position de travail, la pompe (A) communique avec la partie dépourvue de liquide du réservoir (S) par la première canalisation de communication (25, 26b, 27, 28) du système de distribution pneumatique (22 - 32) et, lorsque l'élément capteur (18) est dans sa seconde position de travail, la partie dépourvue de liquide du réservoir (S) communique par l'intermédiaire de la seconde canalisation de communication (14, 24, 26, 28, 31, 32) du système de distribution pneumatique (22, 32) avec le second élément manométrique (10, 11) et avec le conduit ayant un rétrécissement (33), et

un dispositif de mesure associé au circuit de commande (2) et destiné à détecter la durée des périodes pendant lesquelles l'élément capteur (18) reste dans sa seconde position de travail afin que le volume de liquide présent dans le réservoir fermé (S) soit tiré de la durée de ces périodes d'indication.

2. Dispositif selon la revendication 1, caractérisé en ce qu'il comprend:

deux paires de capsules manométriques (8, 10; 9, 11), comprenant chacune une première (8; 9) et une seconde (10; 11) capsule manométrique ayant des diaphragmes flexibles respectifs (8a, 10a; 9a, 11a) tournés les uns vers les autres et un élément allongé de raccordement (15, 16) placé entre les diaphragmes en regard (8a. 10a; 9a, 11a), les deux paires de capsules (8, 10; 9, 11) étant couplées avec une disposition telle que la première capsule (8, 9 respectivement) et la seconde capsule (10, 11 respectivement) de chaque paire communique respectivement avec la première capsule (9, 8 respectivement) et la seconde capsule (11, 10 respectivement) de l'autre paire, et les éléments de raccordement (15, 16) des deux paires de capsules (8, 10; 9, 11) sont sensiblement parallèles, ne sont pas alignés et se déplacent en sens opposés afin que la pression présente dans les capsules correspondantes (8, 9. 10, 11) de chaque paire varie, et

un élément capteur allongé (18) coopérant avec les éléments sensiblement parallèles et non alignés de raccordement (15, 16) avec une disposition telle qu'un déplacement relatif des éléments de raccordement (15, 16) provoque un pivotement correspondant de l'élément capteur (18).

3. Dispositif selon l'une des revendications 1 et 2, caractérisé en ce que le circuit de commande (2) a une source lumineuse (20) et un photodétecteur (21) associés, et en ce que l'élément capteur (18) est constitué par un tronçon d'un guide optique qui, dans une position de travail choisie parmi la première et la seconde position de travail, transmet le rayonnement entre la source (20) et le photodétecteur (21), alors que, dans l'autre position de travail, cette transmission du rayonnement est pratiquement empêchée.

4. Dispositif selon l'une quelconque des revendications 1 à 3, caractérisé en ce que l'obturateur (34) du système de distribution pneumatique (22 - 32) est commandé par une électrovanne (35), et en ce que le circuit de commande (2) est constitué par un circuit électrique.

5. Dispositif selon l'une quelconque des revendications précédentes, caractérisé en ce que le rapport de la surface de chaque diaphragme flexible (10a, 11a) du second organe manométrique (10, 11) et la surface du diaphragme flexible respecitif en regard (8a, 9a) du premier organe manométrique (8, 9) est sensiblement égal à quatre.

FIG. 1

0 169 175

FIG. 2

0 169 175